# EUROPEAN PATENT APPLICATION

(11) **EP 1 414 085 A1**
(43) Date of publication of application: **28.04.2004**
(21) Application number: 03102604.0
(22) Date of filing: 20.08.2003
(51) Int. Cl.: H01M 2/12, H01M 2/36

(54) **Ramp structure for electrical battery of the type "Kamina"**

(30) Priority: 05.09.2002 IT MI20021892
(71) Applicant: Sampellegrini, Angelo, 26025 Pandino (Cremona) (IT)
(72) Inventor: Sampellegrini, Angelo, 26025 Pandino (Cremona) (IT)
(74) Representative: Faggioni, Giovanmaria, Dr.

(57) **Abstract**

The invention relates to a plug ramp closing the upper part of an electrical electrolyte battery of the type "Kamina". A tubular pipe (8, 108) crosses longitudinally said ramp to form an exhaust pipe, said pipe communicating with the inside of the battery through a plurality of box-shaped receptacles (4,5; 100a). Each of these is equipped with a plug-type extension (4a, 4b, 4c; 104a, 104b, 104c) plugged in, in a fluid-tight and gas-tight manner, into one of the holes provided in the battery top wall. Said tubular pipe (8, 108) is equipped with a plurality of nozzles (8c, 108c) which extend towards the inside of the box-shaped receptacles (4,5; 100a) by a small measure, such measure being larger than the maximum level (2") that the battery liquid can reach within said box-shaped receptacles when the battery is overturned. The ramp is formed both as a single box body, divided into a plurality of sections, each forming one of said box-shaped receptacles, and as a simple box cover, into which said receptacles engage - shaped as separate bodies - in a liquid-tight and gas-tight manner.

## Description

The present invention relates to a plug ramp for an electrical battery, designed to equip in particular batteries of the "Kamina" type, which require both a high degree of ventilation of the gas produced, during recharge in particular, and the gas to be channelled towards a common breather pipe leading to the outside.

It is known that sulphuric-acid electrical batteries, both of the stationary type (used for example in power stations, telephone exchanges, railway stations) and of the traction type, or those used in vehicles, during recharge develop gases which carry electrolyte particles.

Specifically, batteries named "Kamina" are also known, in which the cover (which carries a plurality of vents, with a generally threaded inner surface to screw in an equal number of plugs) is crossed longitudinally by a tubular pipe going through each of said vents and coming out at the ends. Once the cover is welded onto the battery body containing its diverse elements, the chambers of said elements communicate with each other by means of said tubular pipe.

The main benefit of these known "Kamina" batteries consists in the fact that said tubular pipe produces an excellent channelling to the outside of the gases that develop during recharge, with the option of applying flame-arresters in the form of filter discs to the common exit, thereby noticeably improving battery safety in this respect.

On the other hand, said tubular pipe has the disadvantage of establishing easy communication between the chambers of the different battery elements, therefore allowing electrolyte transfer from one element to the other during operation.

The aim of the present invention is hence to manufacture a "Kamina"-type "ramp" structure which, despite maintaining good ventilation conditions, ensures an excellent seal against fluid leakage, even in overturned conditions. A further aim of the invention is to manufacture a ramp in which the plug structure according to the invention allows to maintain the advantage of channelling gases into a common tubular pipe, but of avoiding the disadvantage of electrolyte transfer from one battery element to the other. These results are achieved by means of the characteristics mentioned in the attached claim 1.

Further characteristics and advantages of the present invention will become apparent from the following detailed description of some preferred embodiments, given merely by way of a non-limiting example, with reference to the accompanying drawings, wherein:
figg. 1a, 1b, and 1c show the diagram of the principle informing the invention;
fig. 2 shows a schematic vertical section of a box-shaped receptacle with a plug according to the invention;
figg. 2a, 2b, 2c, and 2d are views of the same box-shaped receptacle as shown in fig. 2, respectively in a vertical, partial section, according to a plane at 90° to that depicted in fig. 2, from above, from underneath, and in an upturned view to the view of fig. 2 respectively;
fig. 3 is a longitudinal, vertical section, with parts in view or partially covered, of a "Kamina" ramp employing a plurality of box-shaped receptacles with plugs according to the invention;
fig. 3a is a vertical cross-section of the same ramp depicted in fig. 3;
fig. 3b is a view from underneath of the ramp depicted in fig. 3;
fig. 3c is a longitudinal, vertical section of the ramp cover only depicted in fig. 3, without plug receptacles;
fig. 3d is a vertical cross-section of the same cover depicted in fig. 3c; and
figg. 4, 4a, and 4b are similar views to those depicted in figg. 3, 3a, 3b, but referring to a different embodiment.

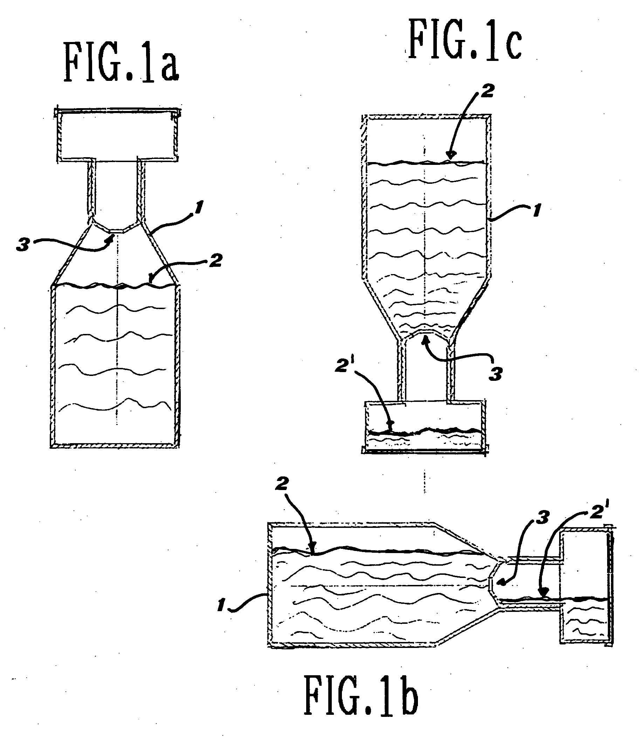

The principle on which the present invention is based is illustrated in figg. 1: as shown, when a container 1 is filled with a large amount of liquid, for example to the level indicated by 2, and is provided with a small exit hole 3, it is possible to turn over the container - for example in the lying down position shown in fig. 1b, or in an upturned position as in fig. 1c - without fearing a liquid spillage, but in extremely small quantities.

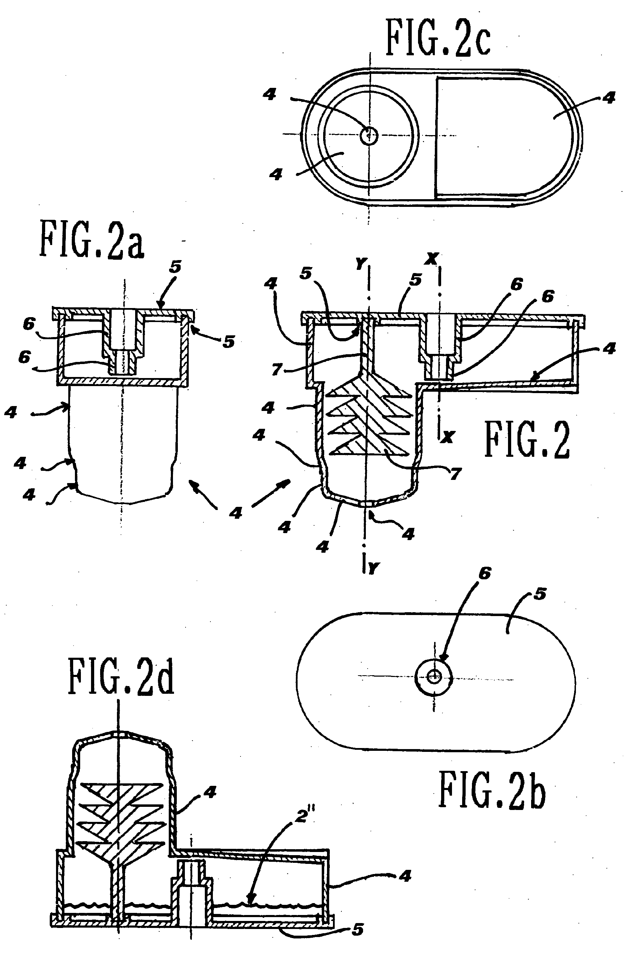

As a matter of fact, looking at fig. 1b for example, when a minimal amount of liquid 2' has come out - referred to, here and in the following text, by convention only, "compensation quantity" -, which however is enough to create a vacuum inside container 1, the spillage ceases completely; it is essential, in order for this phenomenon to occur, that the container is perfectly sealed and communicates with the outside exclusively by means of said small hole 3. This, however, is a phenomenon that can be observed in everyday life every time one tries to pour some liquid from a container having a single, relatively small exit hole: considering for example a perfectly sealed oil tin, experience shows that, punching a single small hole in such a tin, the tin can be overturned, as in fig. 2c, without the liquid coming out (but in an initial minimal quantity, namely a compensation quantity), and it is necessary to punch a second hole, away from the first one, to allow regular oil flow. This is due to the fact that, while a hole lets oil out, the other one lets enough air into the tin to restore the ambient pressure conditions in the tin itself.

According to a first embodiment of the invention, the pipe-shaped ramp and its anti-overturning plugs are therefore manufactured as shown in figures 2-2c. Each plug element is formed by a box-shaped receptacle 4, which is manufactured in a single piece with a body in the shape of a flanged cylinder 4a, 4b, 4c, forming a real plug body intended to engage in a respective hole in the battery cover. Receptacle 4 is completed by a cover 5, joined to it in a fluid-tight and gas-tight manner by means of, for example, ultrasound welding along its seam 5a. At least box-shaped receptacle 4 and its plug body 4a, 4b, 4c, are made, for instance by pressing, of a rather soft, sulphuric-acid-proof plastic material, such as PE-HD.

As said, the main upper body 4d of box-shaped receptacle 4 extends into a lower part essentially shaped as a flanged-cylinder plug, consisting of two anular portions 4a, 4b, of different diameters, linked by a tapered portion 4c. More precisely, the diameter of lower portion 4b is smaller than that of upper portion 4a, so that the tapered portion converges down, for the function better described below. Such plug-like lower part is closed by a horizontal or slightly tapered lower wall 4e, ending at the centre in a small-diameter vent 4f. The upper part 4d of the box-shaped body preferably features an elliptical contour, as shown in plan views 2b and 2c (but it could have a different contour, too, for example a rectangular one), the bottom of which is equipped with an opening joining part 4a on one side and, on the other side, forms a slightly slanting wall 4g, descending towards said part 4a, for the function equally better described below.

Cover 5 features a hole in the centre, which is linked to a short, pipe-shaped shank 6, whose diameter decreases at its lower end 6a; more precisely, this "shortness" indicates that the pipe-shaped shank 6 is of such a length that it projects into box-shaped receptacle 4, 5 by a measure just over the maximum level 2" (see fig. 2d) that can be reached by the battery electrolyte in the same box-shaped receptacle in an overturned battery position (for example, and as is shown again in fig. 2d, the pipe-shaped shank 6 ends in a mouthpiece opened at a short distance from slanting bottom 4e).

The axis X-X of the pipe-shaped shank 6 is parallel, but at a short distance from, axis Y-Y of the flanged-cylinder plug 4a, 4b, 4c, for the function better described below.

The inner wall of cover 5, aligned along the same axis Y-Y, also has an anchoring seat 5b for a shank 7a of a labyrinth body 7, which is consequently centrally housed in the flanged cylinder 4a, 4b, 4c. This body 7 (of a known per se tree structure) serves to decant the gas vapour, causing any liquid droplets to fall downwards that should deposit on the tapered walls of the tree structure discs.

The anti-overturning box-shaped receptacle structure just described is such that its flanged-cylinder plug part 4a, 4b, 4c, can be inserted in a sealing manner into one of the holes of the upper wall of a battery, in a known way. However, it is to be noticed that in the layout according to the invention, inserting and seal-coupling is made easier, on the one hand, by the fact that the diameter of the cylindrical portion 4b - chosen slightly smaller than that of the battery holes - is such that it allows insertion with some play, hence effortlessly, into one of said holes; on the other hand, the cylindrical portion 4a, instead, has a diameter slightly larger than that of its battery hole, resulting in a forced insertion being required, also due to the bevelled portion 4c.

This forced mounting creates a second, perfectly fluid-tight and gas-tight joint, between wall 4a, 4b, 4c of the plug and its top battery hole. It can therefore be said that the inner chamber of the battery itself (not shown, but containing as known the electrolyte liquid) communicates with the outside only by vent 4f, therefore only by the pipe-shaped shank 6, 6a. Therefore, should the battery be upturned completely or overturned, only a small amount of liquid - for example only 5 ml. in the case of the specific embodiment of the present invention - can come out through vent 4f towards the hollow chamber 4d of the box-shaped receptacle; then, due to the vacuum present inside the battery chamber caused by the phenomenon described at the beginning, the liquid stops coming out.

The volume of the box-shaped receptacle cavity 4, and more specifically the volume of part 4d of receptacle 4, is determined in such a way that it contains with certainty said small amount of compensation liquid that can come out; as shown from the level of liquid 2" in figure 2d, representing the up-turned receptacle, this quantity of liquid decants on the bottom and, when the battery returns in a normal position and box-shaped receptacle 4 returns in an upright position, the liquid can flow back into the flanged-cylinder body 4a, 4b, 4c, if necessary flowing along the bottom slanting wall 4g.

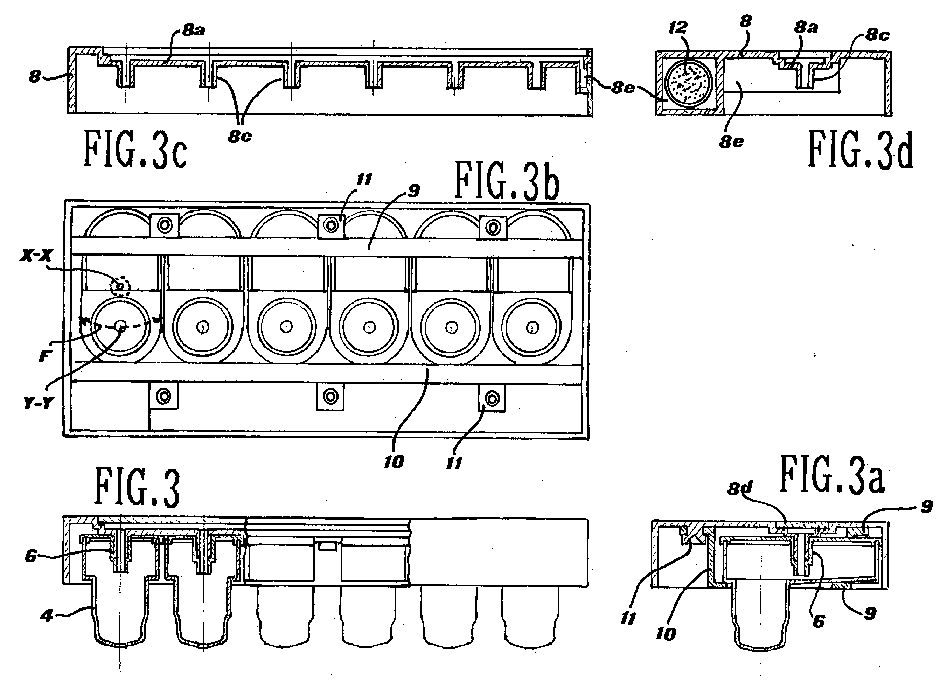

According to a further characteristic of the present invention, the box-shaped receptacle described above is very suitable to be used jointly with a "Kamina-type ramp" as shown in figures 3. As shown in figures 3c and 3d, such ramp is essentially in the shape of a cover 8, in whose top wall a channel 8a is formed; at the end of this channel a plurality of nozzles in the shape of short pipes 8c projecting downwards is linked. More specifically, a number of nozzles 8c is provided equal to the number of holes in the upper wall of the battery, i.e. to the number of box-shaped receptacles 4, 5 that must be associated with the ramp.

Cover 8, with its pipe-shaped nozzles 8c, is preferably made in a rigid plastic material - such as ABS o PC - which withstands well welding and can support the weight of other stacked batteries, in a warehouse situation.

Figures 3 and 3a show that each box-shaped receptacle 4, 5 is associated with ramp 8 by engaging its pipe-shaped shank 6 (made of a soft, hence pliable material) into one of the rigid pipes 8c of cover 8. Insertion needs to be slightly forced, namely exploiting the elasticity of one or the other of the materials which pipe 8c and the pipe-shaped shank 6 respectively are made of. This forced mounting of receptacle 4 on ramp 8 or, more specifically, of shank 6 on pipe 8c, creates a third, perfectly fluid-tight and gas-tight union, between these two elements 4 and 8.

A further anchorage of the whole series of box-shaped receptacles 4, 5 to ramp 8 is provided by a pair of strips 9 and 10, shaped in order to support from underneath receptacles 4, 5, and which are fixed by means of rivets 11 to ramp 8 (see also in the view from underneath of fig. 3b).

Thanks to this mounting, each plug-type, box-shaped receptacle can briefly rotate, or swing around axis X-X, as shown by the double arrow F in fig. 3b. This capability of a brief oscillation allows - when mounting ramp 8 onto the battery upper wall - to perfectly centre axis Y-Y of each flanged cylinder 4a, 4b, 4c to its hole in the battery upper wall, automatically overcoming any discrepancies in the distance between the centres of the battery holes and/or of the pipe-shaped nozzles 8c.

Channel 8a is closed by a sealed upper strip 8d; between this strip 8d and the bottom of channel 8a an essentially tubular pipe is created, which forms a "pipe" and communicates, on the one hand, with the inside of the battery by means of said pipes 8c and, on the other hand, with the outside by means of an end channel portion 8e, closed by a disc 12 which serves as a flame-arresting filter.

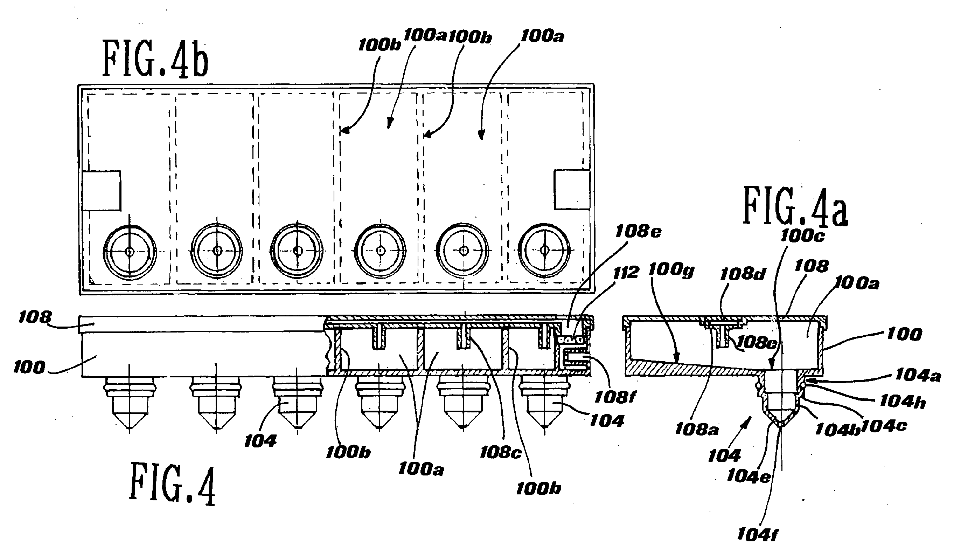

In the embodiment shown in figures 4-4b the parts similar to those shown in figures 2 and 3 are numbered with the same reference numbers increased by 100.

This embodiment is simplified, compared to the embodiment described previously, mainly due to the fact that the box-shaped receptacle structure - formed as an independent body 4, 5 in the previous embodiment - is here incorporated in the ramp structure. The advantage provided by the presence of individual box-shaped receptacle bodies and by their capability of automatically registering their position with reference to the holes of the battery top wall was relinquished; and yet this relinquishment goes towards, on the one hand, a limitation of manufacturing costs and, on the other hand, an increased available volume to collect exhaust gases in the ramp body.

This increased volume is intended to better respond to the needs expressed by some car manufacturers in their battery type approval specifications, which require that batteries - in an upturned position and for at least 2 minutes under charge at a voltage of 14,3 V - maintain a perfect seal, without electrolyte loss. In these charging conditions, in which a considerable amount of gas develops, it could namely occur that this gas - compensating the vacuum created in the battery chambers by the phenomenon described at the beginning - ends up pumping the electrolyte towards the outside in a quantity larger than the small "compensation quantity" quoted at the beginning and that can be accepted by the chamber formed in the box-shaped receptacle 4, 5 described previously, bringing the level 2" of electrolyte over the top of pipe 6a-8c. It is hence apparent that, being able to use a ramp with a larger gas collecting chamber, this volume can collect effortlessly the excess electrolyte that may be pumped during the 2 minutes of the test.

Hence, as already said and shown in figures 4-4c, in this embodiment variant it is the ramp itself that is manufactured as a box-shaped body, consisting of a lower body 100 and of an upper cover 108. The elongated body 100 is divided into a plurality of sections 100a by partitions 100b running transversally across it. Each of these sections 100a makes up a box-shaped receptacle equivalent to receptacle 4, 5 of the variant according to figures 2 and 3.

In the bottom wall of each section is provided with an aperture 100c, to which a plug body 104 substantially similar to the plug body 4a, 4b, 4c of the embodiment variant of figures 2 is linked; walls 104a and 104b, which have different diameters, are namely present, as well as the tapered lower wall 104e ending with a vent 104f. The only differences concern the fact that the tapered wall 4c is here replaced by a short shoulder 104c, and that a further sealing element was added, consisting of a seal 104h, in the shape of an O-ring.

Body 104 is preferably obtained as a single piece integral with the bottom wall of body 100, at an end position of each section 100a (see fig. 4a); this obviously allows to create the same perfectly fluid-tight and gas-tight joint between body 104 and body 100 of the ramp, as seen in the previous variant. In addition, the inner surface 100g of the body bottom 100 is slanting, similarly to the bottom wall 4g of the variant depicted in figure 2.

On the box-shaped body 100, cover 108 is applied, as already mentioned, which in this case too is fixed preferably by welding and equally achieves a perfectly fluid-tight and gas-tight coupling. Welding is performed not only on the peripheral walls of body 100, but also at the top of each of the partitions 100b, so that each of the sections 100a is completely separate from the others, except of course for the passage through the gas channelling pipe.

Cover 108 in practice is manufactured as the upper part of cover 8 of the ramp in fig. 3, i.e. in its upper wall it features a channel 108a identical to channel 8a; from the bottom of this channel 108a, a plurality of pipe-shaped nozzles 108c equally project downwards, and precisely as many as the number of sections 100a of the ramp, i.e. as many as the holes in the battery upper wall.

The pipe-shaped nozzles 108c, too, project downwards by a short measure. They preferably but not necessarily extend as far as shortly before the opposite bottom wall of their section 100a.

A closing strip 108d is applied over channel 108a, once again completely similar to strip 8d in fig. 3a, which is fixed obtaining a perfect seal, for example by welding. Between strip 108d and the bottom of channel 108a, a gas channelling "pipe" is created.

This pipe, formed by channel 108a, joins an exit chamber 108e at one of the ramp ends; said chamber is closed by a disc 112 with the function of flame-arresting filter and communicates with the outside by means of an exhaust 108f.

Comparing the layout of this embodiment variant with that depicted in figures 2, 3, both the advantage in terms of structure simplification, resulting in lower manufacturing costs, and the advantage of a larger available volume in each section 100a, is immediately apparent, compared to the volume available in each box-shaped receptacle 4, 5 of the variant in figures 2 and 3.

The complex formed by the ramp and its respective plug-type bodies described above is particularly suitable:

both for so-called "electrolyte-free" batteries (i.e. those sold without electrolyte, which will be filled later by the engineer): in such case the ramp is lifted from the battery, then its chambers are filled with electrolyte inserted through the holes in its upper wall, then the ramp is applied again pressing the flanged-cylinder plugs well into said battery holes so as to obtain a perfect seal;

and for so-called "sealed" batteries (i.e. those that are filled with electrolyte in the factory), for which it is possible - in the case of the embodiment variant of figures 2, 3 - to perform in the factory the welding of ramp 8 on the battery upper wall too, with an even better sealing effect.

It goes without saying, however, that the invention must not be considered limited to the specific layouts illustrated above, which represent only example embodiments of it, but that variations are possible, all within the capability of a specialised engineer, without necessarily going beyond the scope of the invention, as defined in the accompanying claims, taken individually or in the most diverse combinations thereof.

## Claims

1. Ramp provided with an exhaust pipe, in particular for the upper closing of a "Kamina"-type electrolyte electric battery, comprising a tubular pipe crossing longitudinally said ramp and communicating with the inside of the battery through a plurality of plug-type bodies, these bodies being associated with the ramp and engaging in a sealed manner in their respective openings in the battery top wall, **characterised in that** it comprises a plurality of box-shaped receptacles (4,5; 100a), each positioned between said ramp and a respective plug, each of such receptacles being manufactured to form a perfect fluid-tight and gas-tight chamber, and yet communicating, on the one hand, with its respective plug-type body and, on the other hand, with said tubular pipe (8, 108), this last pipe being equipped with a plurality of nozzles (8c, 108c) projecting by a short measure towards the inside of said box-shaped receptacles (4,5; 100a), fluid-tight and gas-tight means also being provided between each battery opening and its respective plug-type body, as well as between each box-shaped receptacle and its respective nozzle of said tubular pipe.

2. Ramp as in 1, **characterised in that** said tubular pipe (8, 108) comprises one of said nozzles (8c, 108c) at each of said box-shaped receptacles (4,5; 100a).

3. Ramp as in 2, **characterised in that** said nozzles (8, 108) are in the shape of short, essentially rigid pipes.

4. Ramp as in 1, **characterised in that** said short measure, by which said nozzles (8c, 108c) extend into said box-shaped receptacles (4,5; 100a), is larger than the maximum level (2") that the battery electrolyte liquid can reach within said box-shaped receptacles when the battery is upturned.

5. Ramp as in 1, **characterised in that** each box-shaped receptacle (4,5; 100a) comprises a lower extension in the shape of a plug-type body (4, 104), suitable to be engaged into one of the openings of the battery top wall and communicating with the inside of it through a small-diameter hole (4f, 104f), formed at the base (4e, 104e) of the plug-type body.

6. Ramp as in 5, **characterised in that** said plug-type body is essentially in the shape of a flanged cylinder, comprising at least two cylindrical portions (4a, 4b; 104a, 104b) of different diameters, an upper portion (4a, 104a) having such a diameter to cause it to forcibly engage into one of the openings of the battery top wall, said engagement establishing said fluid-tight and gas-tight sealing means between said battery opening and said plug-type body.

7. Ramp as in 6, **characterised in that** the lower portion (4b, 104b) of said two cylindrical portions has a smaller diameter than that of the upper portion (4a, 104a), allowing it to engage with play in its respective opening in the battery top wall, said upper portion and said lower portion (4b, 104b) being joined by a tapered portion (4c) forming a bevel to forcibly engage the upper portion (4a, 104a) in said battery opening.

8. Ramp as in 5, **characterised in that** said plug-type body is essentially shaped as a flanged cylinder, comprising at least two cylindrical portions (4a, 4b; 104a, 104b) of different diameters, the lower portion (4b, 104b) having a smaller diameter than the upper portion (4a, 104a), allowing it to engage with play in its respective opening in the battery top wall and being joined to said upper portion (4a, 104a) through a short shoulder (104c).

9. Ramp as in 5 or 8, further comprising a seal (104h) housed in a respective seat obtained in the wall (4a, 104a) of said plug-type body, said seal (104h) establishing said fluid-tight and gas-tight sealing means between said battery opening and said plug-type body.

10. Ramp as in 9, **characterised in that** said seal (104h) is an O-ring.

11. Ramp as in 5, **characterised in that** said flanged-cylinder-shaped plug-type body is closed at its lower end by a slightly tapered wall (4e, 104e), centrally ending in said small-diameter hole (4f, 104f).

12. Ramp as in 5, **characterised in that** the wall covering said box-shaped receptacle also carries, opposite said plug-type body, a seat (5b) for the fixed joint of a shank (7a) anchoring a labyrinth body (7) projecting into said plug-type body.

13. Ramp as in 5, **characterised in that** said perfectly fluid-tight and gas-tight communication between each box-shaped receptacle and its respective plug-type body is established due to the fact that this plug-type body consists of a single-piece unit with the bottom wall of the box-shaped receptacle.

14. Ramp as in 5 or 13, **characterised in that** each of said plug-type bodies projects from the bottom wall of each of said box-shaped receptacles near one of its ends.

15. Ramp as in 14, **characterised in that** said bottom wall is slanting, with the slope pointing towards the plug-type body associated with it.

16. Ramp as in 1, **characterised in that** said pipe-shaped tubular pipe is formed in the upper wall covering said ramp.

17. Ramp as in 16, **characterised in that** said pipe-shaped tubular pipe is formed between a channel, obtained as a single piece in said cover, and a covering strip applied onto said channel and sealing it off.

18. Ramp as in 16, **characterised in that** each of said pipe-shaped nozzles is made as a single-piece unit with the lower wall of said channel.

19. Ramp as in 1, **characterised in that** said tubular pipe communicates with the outside through a filter disc (12) forming a flame arrester.

20. Ramp as in 1 or 5, **characterised in that** said box-shaped receptacle has a much larger volume than the small quantity of compensation liquid which can overflow into said box-shaped receptacle from the battery chamber through said hole (4f), in the case of an overturned or upturned battery.

21. Ramp as in any one of claims 1-20, **characterised in that** it consists of a box-shaped body, sealed off by a cover and divided into a plurality of sections, each forming one of said box-shaped receptacles.

22. Ramp as in 21, **characterised in that** said sections are sealed from one another.

23. Ramp as in 21, **characterised in that** each of said pipe-shaped nozzles projects from the lower surface of said tubular channel directly into its respective ramp section.

24. Ramp as in any one of claims 1-20, **characterised in that** it consists of a box-shaped, gas-tight and fluid-tight cover and of a plurality of said box-shaped receptacles, each formed as a separate body, and said box-shaped receptacle engaging in a sealing manner into said cover.

25. Ramp as in 24, **characterised in that** said box-shaped cover incorporates said tubular pipe equipped with a plurality of pipe-shaped nozzles projecting downwards from the lower surface of said channel, each of said nozzles engaging in a perfectly fluid-tight and gas-tight manner in an opening provided in the upper wall of each separate box-shaped receptacle.

26. Ramp as in 25, in which said opening provided in the upper wall of each separate box-shaped receptacle extends in the inside of the receptacle into a pipe-shaped shank (6) ending in a mouthpiece opened at a short distance from the bottom of the receptacle, said mouthpiece being formed in the lower, decreasing-diameter end of said shank.

27. Ramp as in 25 or 26, **characterised in that** the seal between said pipe-shaped nozzles (8c) and said openings (6) is achieved by press-insertion of the nozzles into said pipe-shaped shanks (6), this insertion establishing said fluid-tight and gas-tight means between each box-shaped receptacle and its respective nozzle on the tubular pipe.

28. Ramp as in 24, **characterised in that** each box-shaped receptacle comprises a lower hollow, plug-type body (4), consisting of a substantially flanged-cylinder-piece (4a, 4b, 4c) and an upper box-shaped body (4d), as well as of a cover (5) sealing off said upper body.

29. Ramp as in 27 and 28, wherein the axis (X-X) of the pipe-shaped shank (6) runs parallel to, but at a short distance from, the axis (Y-Y) of the flanged cylinder (4a, 4b, 4c).

30. Ramp as in 28, wherein said upper box-shaped body (4d) has an elliptical plan contour.
